# FASCICULE DE BREVET EUROPEEN

(11) **EP 3 479 670 B1**
(45) Date de publication et mention de la délivrance du brevet: **12.08.2020**
(21) Numéro de dépôt: 18190176.0
(22) Date de dépôt: 22.08.2018
(51) Int. Cl.: A01C 5/06, A01C 7/20

(54) **DISPOSITIF D'OUVERTURE POUR SEMOIR**
ÖFFNUNGSVORRICHTUNG FÜR SÄMASCHINE
OPENING DEVICE FOR SOWING MACHINE

(30) Priorité: 07.11.2017 FR 1760446
(43) Date de publication de la demande: 08.05.2019
(73) Titulaire: Carbure Technologies SAS, 49490 Noyant-Villages (FR)
(72) Inventeur: DUMOULIN, Tom, 49400 Saumur (FR)
(74) Mandataire: Nony

(56) Documents cités:
- EP-A1- 2 208 409
- US-A- 3 797 418
- US-A1- 2003 084 829
- US-A1- 2016 360 690
- US-B1- 6 345 671

## Description

### Domaine technique

La présente invention concerne un semoir destiné à être fixé sur un étançon d'un engin agricole. Un tel semoir est destiné à ouvrir la terre de manière à créer une fente, puis à disposer un composé, et en particulier une graine dans ladite fente. L'invention concerne également un dispositif d'ouverture et une descente de semoir, notamment pour un tel semoir.

### Art antérieur

Les semoirs à soc bouleversent la terre et bourrent lorsqu'il y a trop de débris végétaux. Alternativement, on connaît un semoir à disque ouvreur. Un tel semoir comporte un disque ouvreur qui vient découper la terre et ainsi créer une fente, et une descente de semoir disposée au-dessus du disque ouvreur et au moyen de laquelle une graine est déposée dans la fente. Des essais ont cependant montré que les résultats ne sont pas satisfaisants. Des exemples connus dans le domaine technique sont représentés par US 3797418 A et US 2016/360690 A1.

Par ailleurs, les semoirs actuels ne permettent pas de semer des graines de tailles différentes, à des profondeurs variables. En outre, lorsque des graines de tailles différentes sont simultanément disposées dans un même réservoir, elles ont tendance à sédimenter. Les semoirs actuels ne permettent pas non plus de distribuer des composés incompatibles entre eux, comme des graines et des granulés anti-limaces.

Les semoirs actuels nécessitent également un travail de la terre conséquent avant l'utilisation du semoir, et en particulier un décompactage, un déchaumage et un labour. Ce travail de préparation a un coût élevé et un impact négatif sur l'environnement.

Il existe un besoin pour un nouveau semoir permettant de résoudre, au moins partiellement, les problèmes susmentionnés.

### Résumé de l'invention

L'invention est définie par les revendications annexées.

Comme on le verra plus en détail dans la suite de la description,
le disque ouvreur est destiné, dans une position de service dans laquelle le semoir est tiré sur un sol sensiblement horizontal, à couper la terre de manière à ménager une fente étroite dans le sol,
le coutre est destiné à élargir ladite fente étroite, de manière à ménager une fente élargie, la descente de semoir est destinée à l'injection de composés, en particulier de graines, dans la fente élargie, et
la roue de fermeture est destiné à refermer la fente élargie.

L'inventeur a constaté qu'un tel semoir permet d'obtenir des résultats surprenants, sans travail de préparation de la terre. En particulier, le coutre évite que la fente ne se referme avant que les graines ne soient déposées.

Un semoir selon l'invention peut également comporter une ou plusieurs des caractéristiques optionnelles suivantes :
- des outils de préparation du sol sont fixés sur le limiteur de profondeur ;
- la descente de semoir comporte un tube qui débouche par au moins une ouverture inférieure à une altitude inférieure à ladite profondeur d'enfoncement maximal ;
- le tube change d'orientation et/ou se ramifie dans sa partie inférieure ;
- le semoir comporte plusieurs dits tubes débouchant par des ouvertures inférieures respectives, à des altitudes différentes ;
- le semoir comporte, associés à un disque ouvreur,
   - une descente de semoir ;
   - un coutre ; et
   - une unique roue de fermeture s'étendant dans le plan du disque ouvreur ou deux roues de fermeture s'étendant de manière sensiblement symétrique par rapport au plan du disque ouvreur ;
- le semoir comporte une ailette de déflection configurée pour tirer le semoir vers le bas lorsque le semoir est tiré alors que le disque ouvreur est enfoncé dans le sol ;
- le semoir comporte des moyens de réglage de la position, de préférence au moins selon la direction horizontale et/ou selon la direction verticale, du coutre et/ou de la descente de semoir et/ou du disque ouvreur, par rapport au support ;
- la distance entre la descente de semoir et le coutre est inférieure à 10 cm ;
- le bord périphérique du disque ouvreur est crénelé ou lisse ;
- dans la position de service, l'axe X de rotation du disque ouvreur est incliné, par rapport à un plan horizontal, d'un angle θ supérieur à 3° et inférieur à 10° ;
- dans la position de service, vu de dessus, l'axe X de rotation du disque ouvreur forme un angle λ supérieur à 79°, 80°, 81°, 82°, et/ou inférieur à 89°, de préférence inférieur à 88°, ou 87°, 86°, 85° ou 84° avec le plan de la roue de fermeture, c'est-à-dire avec un plan vertical qui contient la direction d'avancement du semoir ;
- la butée comporte au moins une ceinture coaxiale au disque ouvreur ;
- le semoir comporte des crampons faisant saillie sur la surface radialement extérieure de la ceinture ;
- la ceinture est tronconique d'axe X, de manière, dans la position de service, à prendre appui sur le sol suivant une génératrice du cône suivant lequel la ceinture s'étend ;
- le semoir comporte des première et deuxième dites ceintures, qui s'étendent sur des première et deuxième faces latérales du disque ouvreur, respectivement ;
- les première et deuxième ceintures s'étendent suivant la même surface conique ;
- les surfaces radialement extérieures des première et deuxième ceintures portent des bourrelets de matière sous la forme de premières bandes et de deuxièmes bandes, respectivement, lesdites premières et deuxièmes bandes étant de préférence agencées de manière à définir une pluralité de chevrons, chaque chevron pointant, dans la position de service et lorsqu'il est en contact avec le sol, dans le sens de l'avancement du semoir ;
- les première et deuxième bandes qui forment un chevron, de préférence un chevron quelconque, ne se rejoignent pas à la pointe du chevron ;
- chacune des première et deuxième bandes a une extrémité intérieure à proximité ou en contact avec le disque ouvreur ;
- la distance *d* entre les projections axiales, c'est-à-dire selon la direction de l'axe X, dans le plan du disque ouvreur, de l'extrémité intérieure de la première bande et de l'extrémité intérieure de la deuxième bande est comprise entre 5 et 50 mm.

L'invention concerne également un procédé d'ensemencement selon lequel on tracte un semoir selon l'invention dans ladite position de service, en alimentant la descente de semoir avec un composé à distribuer, par exemple des graines ou un produit phytosanitaire.

L'invention concerne également un dispositif d'ouverture pour semoir, notamment destiné à un semoir selon l'invention, le dispositif d'ouverture comportant :
- un disque ouvreur d'axe X ;
- un limiteur de profondeur fixé sur le disque ouvreur et comportant une butée définissant, dans une position de service, une profondeur d'enfoncement maximale du disque ouvreur dans le sol,
dispositif dans lequel le limiteur de profondeur comporte des moyens de pincement configurés pour, dans ladite position de service, pincer des végétaux contre le sol, en un point de pincement localisé, suivant le sens d'avancement, devant l'axe X.

De préférence, les moyens de pincement comportent un outil s'étendant radialement vers l'extérieur au-delà de la butée, et/ou
la butée est configurée de manière à être partiellement enfoncée dans le sol lorsque le disque ouvreur est dans ladite position de service.

Comme on le verra plus en détail dans la suite de la description, lorsque le disque ouvreur est utilisé pour ménager une fente dans une terre comportant des végétaux à sa surface, et notamment de la paille, la butée vient limiter l'enfoncement du disque ouvreur dans le sol. Lorsque le disque ouvreur est à ladite profondeur d'enfoncement maximale, l'outil s'étendant radialement vers l'extérieur vient prendre appui sur le sol devant l'axe du disque ouvreur. Il vient ainsi pincer les végétaux contre le sol. Ainsi retenus, les végétaux ne peuvent donc être poussés par le disque ouvreur jusqu'au fond de la fente.

Un effet équivalent, mais généralement de moindre amplitude, est obtenu lorsque la butée est configurée pour pénétrer légèrement dans le sol dans la position d'enfoncement maximal du disque ouvreur. Un pincement devant l'axe X est alors assuré par la butée elle-même.

L'inventeur a constaté que ce résultat permet d'améliorer le rendement agricole. Sans être lié par cette théorie, l'inventeur explique ce résultat du fait que les végétaux n'étant pas poussés jusqu'au fond de la fente, ils ne forment donc pas un matelas qui isole de la terre les graines déposées, comme selon la technique antérieure. La germination de ces graines en est avantageusement facilitée.

Un dispositif d'ouverture selon l'invention peut également comporter une ou plusieurs des caractéristiques optionnelles suivantes :
- la ceinture présente un rayon variable élastiquement entre un rayon minimal définissant la profondeur d'enfoncement maximale et un rayon maximal, supérieur au rayon minimal, l'élasticité de la ceinture lui permettant de présenter le rayon minimal au droit de l'axe X du disque ouvreur, c'est-à-dire dans un plan transversal vertical, incluant l'axe X du disque ouvreur, et le rayon maximal devant l'axe X du disque ouvreur, c'est-à-dire en amont de l'axe X lorsque le dispositif d'ouverture est tracté ;
- l'outil s'étendant radialement vers l'extérieur, au-delà de la butée, fait radialement saillie de plus de 1 cm, de plus de 3 cm, de plus de 5 cm, et/ou de moins de 20 cm, de préférence de moins de 10 cm, au-delà de la butée ;
- la butée est configurée de manière à être enfoncée dans le sol, lorsque le disque ouvreur est à ladite profondeur d'enfoncement maximale, sur plus de 3 cm, plus de 5 cm, et/ou moins de 10 cm, de préférence de moins de 8 cm ;
- la butée est constituée par au moins une ceinture coaxiale au disque ouvreur ;
- la ceinture est conformée pour s'enfoncer partiellement dans le sol et/ou porte au moins un dit outil adapté pour s'enfoncer au moins partiellement dans le sol, lorsque le disque ouvreur tourne à ladite profondeur d'enfoncement maximale ;
- la ceinture est continue et fermée sur elle-même ;
- le limiteur de profondeur comporte des première et deuxième dites ceintures, de même diamètre extérieur, qui s'étendent sur des première et deuxième faces latérales du disque ouvreur, respectivement ;
- les première et deuxième ceintures sont fixées à la périphérie de premier et deuxième plateaux respectifs, de même diamètre extérieur, qui s'étendent sur les première et deuxième faces latérales du disque ouvreur, respectivement ;
- le disque ouvreur est serré entre les premier et deuxième plateaux au moyen de boulons dont les vis traversent successivement le premier plateau, le disque ouvreur et le deuxième plateau.

L'invention concerne encore un procédé d'ouverture d'un sol au moyen d'un dispositif d'ouverture selon l'invention, procédé suivant lequel on tracte ledit dispositif dans une position de service dans laquelle la butée est en butée sur le sol de manière à définir la profondeur d'enfoncement maximale du disque ouvreur dans le sol, les moyens de pincement venant pincer des végétaux contre le sol, en un point de pincement localisé, suivant le sens d'avancement, devant l'axe X.

De préférence, les moyens de pincement comportent un outil s'étendant radialement vers l'extérieur au-delà de la butée et, lors de ladite traction, l'outil est partiellement ou totalement enfoncé dans le sol à chaque tour du disque ouvreur, voire en permanence, sur une profondeur supérieure à 0,5 cm, à 1 cm, à 2 cm, à 3 cm et/ou inférieure à 20 cm, à 15 cm, à 10 cm, à 8 cm, à 5 cm.

Dans un mode de réalisation, la butée est en permanence enfoncée dans le sol sur une profondeur supérieure à 0,5 cm, à 1 cm, à 2 cm, à 3 cm et/ou inférieure à 20 cm, à 15 cm, à 10 cm, à 8 cm, à 5 cm.

Un semoir selon l'invention peut également comporter une ou plusieurs des caractéristiques optionnelles suivantes :
- le boîtier comporte au moins deux ouvertures de distribution débouchant sur des faces différentes du boîtier, par exemple sur une face latérale droite et sur une face latérale gauche, ou sur une face latérale et sur une face de fond, ou sur une face latérale et sur une face arrière ;
- le boîtier comporte au moins deux ouvertures de distribution débouchant à des altitudes différentes ;
- le boîtier comporte au moins deux ouvertures de distribution débouchant, dans la position de service, dans des plans longitudinaux verticaux différents, la direction de la longueur étant la direction de déplacement de la descente de semoir dans la position de service ;
- le boîtier est pourvu d'un bouclier faisant saillie de plus de 1 cm d'une face du boîtier dans laquelle est ménagée une ouverture de distribution et disposé de manière à protéger ladite ouverture de distribution des entrées de terre dans la position de service, c'est-à-dire lorsque la descente de semoir est tractée, l'ouverture de distribution débouchant dans une fente ménagée dans la terre ;
- le bouclier présente la forme d'un déflecteur conformé pour, dans la position de service, maintenir la descente de semoir partiellement enfoncée dans la terre ;
- au moins deux desdits tubes présentent des diamètres intérieurs équivalents différents et/ou des sections transversales de formes différentes, la section transversale d'un tube étant perpendiculaire à l'axe du tube ;
- le boîtier comporte des fourreaux, chaque fourreau étant configuré pour recevoir un tube respectif et empêcher un déplacement transversal dudit tube, c'est-à-dire suivant une direction dans un plan perpendiculaire à l'axe du tube ;
- le boîtier comporte au moins une ouverture de distribution débouchant sur une face arrière dudit boîtier et/ou au moins une ouverture de distribution débouchant sur une face de fond dudit boîtier et/ou au moins une ouverture de distribution débouchant sur une face latérale dudit boîtier ;
- le boîtier est constitué par assemblage de plusieurs parties démontables.

### Brève description des figures

D'autres caractéristiques et avantages de l'invention apparaitront encore à la lecture de la description détaillée qui va suivre et à l'examen du dessin dans lequel :
- la figure la représente, vu de côté, un semoir selon l'invention ;
- la figure 1b représente, vue du dessus, la fente produite par le semoir de la figure la ;
- les figures 2 et 8 représentent, vu de côté et en perspective respectivement, un semoir selon d'autres modes de réalisation de l'invention ;
- les figures 3a et 3b représentent, en coupe axiale et vu de côté respectivement, un dispositif d'ouverture selon un mode de réalisation de l'invention ;
- les figures 4a et 4b représentent, en coupe axiale et vu de côté respectivement, un dispositif d'ouverture selon un autre mode de réalisation de l'invention ;
- la figure 5 représente une descente de semoir selon l'invention ;
- les figures 6a et 6b représentent, vu de côté et en perspective respectivement, une variante de descente de semoir selon l'invention ;
- la figure 7 représente une autre variante de descente de semoir selon l'invention, les tubes n'étant pas représentés ;
- les figures 8a à 8e représentent, vu de face (Fig. 8a), vu de côté (Fig. 8b) et en perspective (Fig. 8c et 8e), un dispositif d'ouverture dans un mode de réalisation préféré de l'invention ;
- les figures 9a à 9d représentent, vu de face (Fig. 9a), vu de côté (Fig. 9b) et en perspective (Fig. 9c et 9d), un dispositif d'ouverture dans un autre mode de réalisation préféré de l'invention ;
- la figure 10 représente les projections de l'axe X du disque ouvreur et de la direction d'avancement F dans un plan horizontal, dans la position de service.

Dans les différentes figures, des organes identiques ou analogues sont désignés par des références identiques.

### Définitions

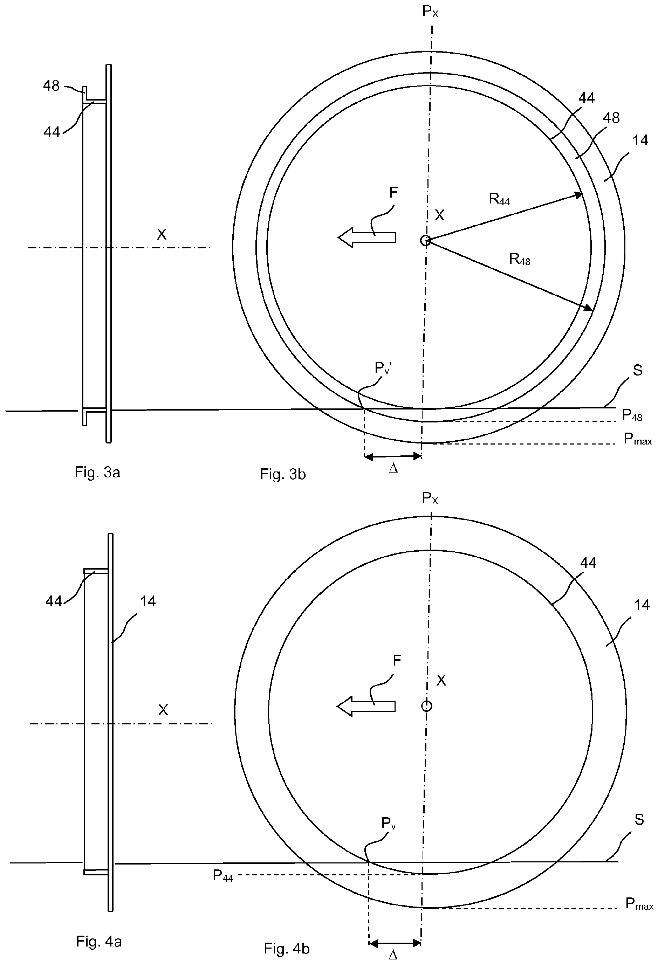

Dans la présente description, les adjectifs « inférieur », « supérieur », « horizontal », "vertical", « amont », « aval », « devant », « derrière », « avant », « arrière », « droite », « gauche » et « latéral » sont définis par rapport à une position de service dans laquelle l'appareil considéré (le semoir ou le dispositif d'ouverture ou la descente de semoir) est tracté, sur un sol horizontal S, suivant une direction d'avancement, dans un sens d'avancement F, pour semer ou ouvrir la terre, comme représenté sur la figure la ou les figures 3 et 4. La flèche F indique le sens d'avancement selon lequel l'appareil est tracté. Elle pointe donc vers « l'avant ». L'amont et l'aval, le devant et le derrière sont relatifs au plan axial vertical, c'est-à-dire au plan contenant l'axe X et qui, dans la position de service, est vertical.

La flèche référencée « V » est verticale et pointe vers le haut. Elle définit la direction verticale suivant laquelle les « altitudes » A sont mesurées, par rapport au support.

Un plan axial est un plan incluant l'axe X, sauf indication contraire.

On appelle «plan longitudinal vertical » un plan s'étendant parallèlement au plan de la roue de fermeture, c'est-à-dire, lorsque la roue de fermeture et le disque ouvreur sont coplanaires, parallèlement au plan du disque ouvreur.

Un plan « horizontal » est un plan qui s'étend parallèlement au plan du sol S.

Le diamètre équivalent d'une section ou d'une ouverture est le diamètre d'un disque présentant la même aire que ladite section ou ouverture.

Il faut interpréter "comprenant " ou "comportant " ou "présentant " de manière non restrictive, sauf indication contraire.

### Description détaillée

### Semoir

Comme représenté sur la figure la, un semoir 10 selon l'invention comporte un support 12 sur lequel sont successivement montés, depuis l'avant vers l'arrière, un disque ouvreur 14, un coutre 16, une descente de semoir 18 et une roue de fermeture 20.

De préférence, le support 12 porte encore un déflecteur 22, en l'occurrence interposé entre le disque ouvreur 14 et le coutre 16.

Le disque ouvreur et/ou le coutre et/ou la descente de semoir et/ou le déflecteur peuvent être en particulier en un acier à haute limite élastique, ou « HLE », ou en inox. Ces pièces peuvent être renforcées localement avec du carbure de tungstène et/ou de la soudure anti-abrasion.

### Support

De préférence, le support 12 comporte un support de disque ouvreur 26 et un étançon 28.

Le support de disque ouvreur 26 est monté sur l'étançon 28. Plus précisément, il est immobilisé sur l'étançon 28 par serrage entre une bride supérieure 30 et une bride inférieure 32, au moyen de vis 34. Le desserrage des vis 34 permet avantageusement de modifier la distance entre l'étançon et le disque ouvreur, et donc de modifier la distance entre le disque ouvreur 14 et le déflecteur 22, le coutre 16, la descente de semoir 18 et la roue de fermeture 20.

De préférence, au moins dans la partie sur laquelle le support de disque ouvreur 26 peut coulisser lorsque les vis 34 sont desserrées, l'étançon 12 présente une section transversale constante, de préférence sensiblement rectangulaire, la largeur de l'étançon étant de préférence supérieure à 10 mm, de préférence supérieure à 20 mm, et/ou inférieure à 50 mm, de préférence inférieure à 40 mm. La longueur de la section transversale de l'étançon est de préférence supérieure à 30 mm, supérieure à 50 mm, supérieure à 70 mm, et/ou inférieure à 200 mm, inférieure à 150 mm, inférieure à 150 mm, inférieure à 100 mm.

Un support de grattoir 24 est de préférence fixé sur le support de disque ouvreur 26.

L'étançon 28 comporte classiquement des moyens de fixation, non représentés, à un engin agricole, classiquement un tracteur. Il présente la forme générale d'une « virgule » et comporte une première branche 29₁, sensiblement horizontale dans la position de service, et une deuxième branche 29₂, sensiblement verticale, qui se ramifie en trois bras 31₁, 31₂ et 31₃ servant de supports au déflecteur 22, à l'ensemble constitué par le coutre 16 et la descente de semoir 18, et à la roue de fermeture 20, respectivement.

### Disque ouvreur

Le disque ouvreur 14, d'axe X, est destiné à ménager une fente étroite dans le sol.

Le disque ouvreur 14 est de forme générale discoïdale afin d'assurer l'ouverture d'une fente continue.

Il est monté à rotation, de préférence libre, sur le support et, dans un mode de réalisation, s'étend dans un plan sensiblement vertical, ce qui facilite sa pénétration dans la terre. L'axe X est alors sensiblement horizontal.

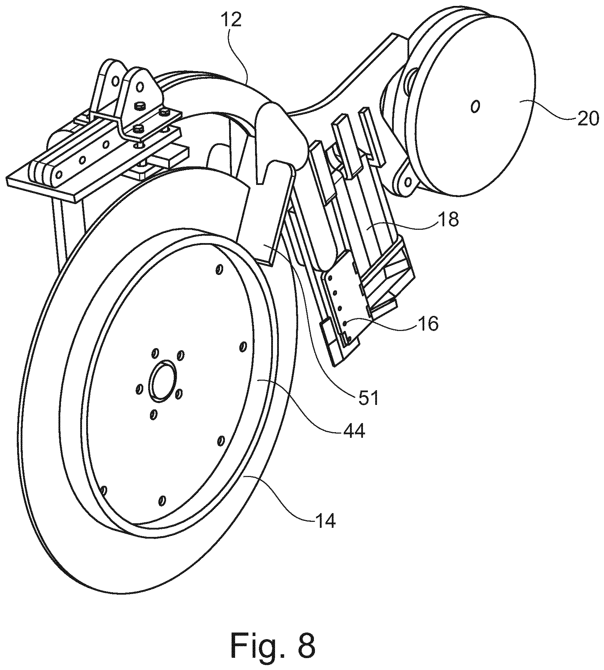

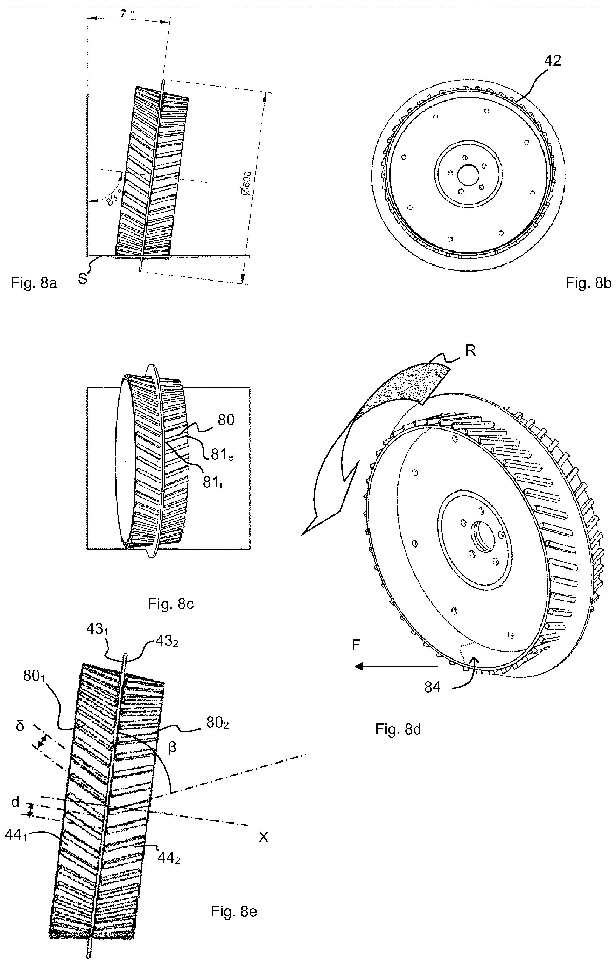

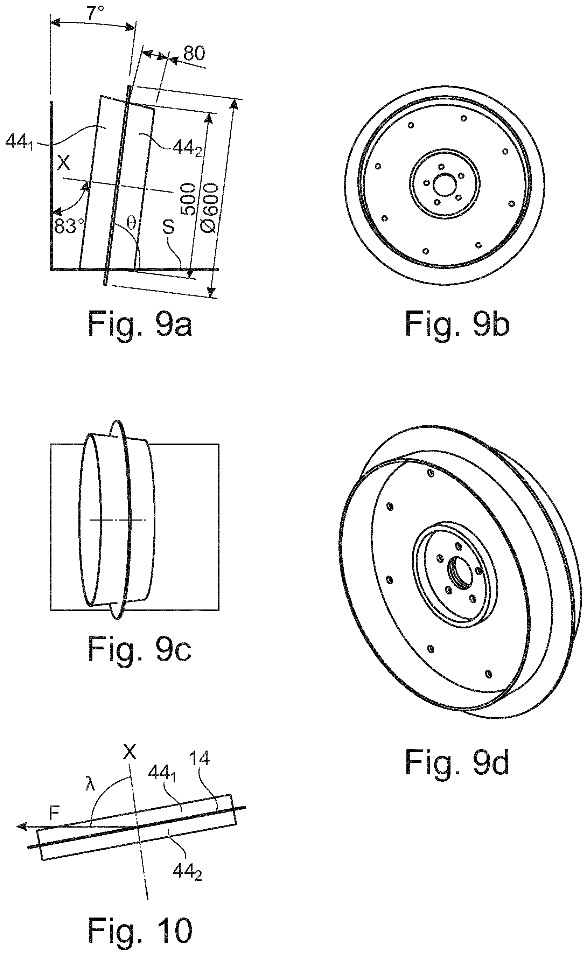

Dans un mode de réalisation préféré, l'axe X est cependant incliné, par rapport à un plan horizontal, d'un angle θ supérieur à 3°, supérieur à 5°, supérieur à 6°, et/ou inférieur à 10°, de préférence inférieur à 9°, de préférence inférieur à 8°, comme représenté sur les figures 8a-8e et 9a-9d. La fente est ainsi inclinée. Les performances pour découper les végétaux sur le sol en sont améliorées.

Dans un mode de réalisation préféré, le semoir comporte autant de disques ouvreurs qu'il ménage de fentes. Autrement dit, pour un coutre, le semoir ne comporte qu'un unique disque ouvreur. Ainsi, chaque fente n'est ouverte qu'avec un unique disque ouvreur 14. La pénétration du disque ouvreur dans la terre en est améliorée.

Le disque ouvreur 14 présente de préférence un diamètre supérieur à 10 cm, supérieur à 20 cm, supérieur à 30 cm, supérieur à 40 cm, supérieur à 50 cm, supérieur à 60 cm, voire supérieur à 100 cm, supérieur à 150 cm, et/ou inférieur à 250 cm, un diamètre de 70 cm étant préféré.

L'épaisseur du disque ouvreur 14, mesurée à 10 mm de son bord périphérique 40, est de préférence inférieure à 20 mm, de préférence inférieure à 15 mm, de préférence inférieure à 10 mm, de préférence inférieure à 8 mm, voire inférieure à 5 mm, voire inférieure à 3 mm, voire inférieure à 2 mm, et/ou supérieure à 1 mm. De préférence encore, le bord périphérique 40 du disque ouvreur 14 est effilé.

Dans un mode de réalisation, l'épaisseur du disque ouvreur est sensiblement constante le long d'un rayon quelconque. Dans un mode de réalisation, cette épaisseur augmente à l'approche de l'axe X, afin de limiter la déformabilité du disque ouvreur. L'épaisseur maximale est cependant, de préférence, inférieure à 20 mm, de préférence inférieure à 10 mm.

Le bord périphérique 40 du disque ouvreur 14 peut être circulaire. Dans un mode de réalisation, il comporte une pluralité de créneaux 42, de préférence équi-angulairement répartis autour de l'axe X. De préférence encore, deux créneaux 42 successifs sont séparés d'une distance d₄₂ supérieure à 10 mm, de préférence supérieure à 30 mm, de préférence supérieure à 50 mm et/ou inférieure à 300 mm, de préférence inférieure à 200 mm.

Les créneaux 42 sont de préférence sensiblement circulaires et présentent, de préférence encore, une profondeur supérieure à 5 mm, de préférence supérieure à 10 mm, de préférence encore supérieure à 20 mm et/ou inférieure à 50 mm.

Les créneaux 42 permettent avantageusement un cisaillement de la terre particulièrement efficace.

Dans un mode de réalisation préféré, le disque ouvreur est pourvu d'un limiteur de profondeur, empêchant mécaniquement l'enfoncement du disque ouvreur au-delà d'une profondeur d'enfoncement maximale Pₘₐₓ.

Dans cette position d'enfoncement maximal dans le sol, le limiteur de profondeur définit une « altitude d'enfoncement maximal », qui est l'altitude du sol S. Les parties du support qui sont au-dessus de cette altitude sont donc au-dessus du niveau du sol. Les parties du support qui sont en-dessous de cette altitude sont en dessous du niveau du sol. Si l'altitude « 0 » est celle de l'extrémité inférieure 43 du disque ouvreur, l'altitude d'enfoncement maximal *Aₘₐₓ* est donc égale à la profondeur d'enfoncement maximale.

La profondeur d'enfoncement maximale Pₘₐₓ est de préférence supérieure à 3 cm, de préférence supérieure à 5 cm, de préférence supérieure à 7 cm, de préférence supérieure à 10 cm, de préférence supérieure à 13 cm et/ou inférieure à 30 cm, de préférence inférieure à 25 cm, de préférence inférieure à 20 cm, de préférence inférieure à 17 cm, une profondeur d'enfoncement maximale de 15 cm étant bien adaptée.

Le limiteur de profondeur comporte de préférence une butée faisant saillie d'une face latérale du disque ouvreur 14. De préférence, de telles butées sont prévues sur chacune des deux faces latérales 43₁ et 43₂ du disque ouvreur 14, de préférence de manière symétrique par rapport au plan du disque ouvreur.

Dans un mode de réalisation préféré, la butée présente la forme d'une ceinture 44. La ceinture est de préférence conformée pour prendre appui à plat sur le sol S.

Lorsque, dans la position de service, l'axe X du disque ouvreur est horizontal, la ceinture est donc de préférence sensiblement cylindrique d'axe X. Dans un mode de réalisation dans lequel l'axe X n'est pas horizontal (figures 8a-8e, 9a-9d), la ceinture est donc de préférence sensiblement tronconique d'axe X.

Dans un mode de réalisation préféré, la butée porte au moins un outil 48 adapté pour pincer les végétaux et/ou travailler le sol. La forme des outils 48 n'est pas limitative. En particulier, ces outils peuvent présenter la forme de plaques s'étendant de préférence sensiblement radialement (outils 48₁), ou sensiblement perpendiculairement à l'axe X (outils 48₂) ou comportant deux plaques formant un V et par exemple fixées, par la pointe du V, sur la face radialement extérieure d'une ceinture décrite ci-après (outils 48₃). Ces outils pourraient être encore des cornières ou des profilés en T ou en T inversé ou en U ou en U inversé ou en rectangle ou en carré.

De préférence, un outil s'étend, au moins partiellement, radialement vers l'extérieur de la butée. Autrement dit, le rayon R₄₄ de la butée ou « rayon minimal du limiteur de profondeur » est inférieur au rayon R₄₈ de l'outil 48, les rayons R₄₄ et R₄₈ étant les distances entre l'axe X et la partie la plus radialement extérieure de la butée 44 et de l'outil 48, respectivement. La différence entre ces deux rayons est de préférence de plus de 1 cm, de plus de 3 cm, de plus de 5 cm, et/ou de moins de 20 cm, de préférence de moins de 10 cm.

Par exemple, la butée peut être une ceinture 44 et porter un anneau s'étendant de préférence sensiblement dans un plan transversal, c'est-à-dire parallèlement au plan du disque ouvreur, radialement à l'extérieur de la ceinture (figure 3).

Le disque ouvreur, la ceinture et l'anneau définissent ainsi un profilé en U ouvert radialement.

Avantageusement, l'outil peut ainsi venir pincer les végétaux, et en particulier la paille, plus en amont, c'est-à-dire prendre appui sur le sol en un point Pᵥ' devant l'axe du disque ouvreur. Les végétaux pénètrent ainsi moins en profondeur dans la fente.

Dans un mode de réalisation, comme représenté sur les figures 8a-8e, les outils présentent la forme de crampons faisant saillie sur la surface radialement extérieure de la ceinture. La ceinture peut en particulier être couverte extérieurement d'une bande de roulement structurée, par exemple comme un pneu de tracteur, les crampons correspondant aux reliefs qui définissent la structure d'un tel pneu. Un crampon peut être un bourrelet de matière, orienté parallèlement à l'axe X.

Un outil, et en particulier un crampon, peut former avec un plan axial passant en son centre, un angle supérieur à 10°, de préférence supérieur à 30°, et/ou inférieur à 90°, de préférence inférieur à 70°, de préférence inférieur à 60°.

Dans un mode de réalisation, la ceinture est couverte extérieurement d'une pluralité de bourrelets formant des bandes qui s'étendent selon des directions différentes, de préférence en formant des chevrons. Les crampons, notamment lorsqu'ils forment des chevrons, peuvent être notamment en caoutchouc.

De préférence, les outils 48 sont conformés pour s'enfoncer dans le sol S sur une profondeur P₄₈ de plus de 1 cm, de plus de 3 cm, de plus de 5 cm, et/ou de moins de 20 cm, de préférence de moins de 10 cm. Plus la profondeur P₄₈ est grande, plus les végétaux sur le sol seront pincés en un point Pᵥ' en amont du plan axial vertical P_{X}, et moins ils s'enfonceront dans la fente.

Dans un mode de réalisation, la ceinture peut être couverte d'une bande déformable, par exemple d'une bande de mousse qui, dans le plan axial vertical Px, c'est-à-dire au droit de l'axe X du disque ouvreur, est comprimée, ce qui confère un rayon minimal au limiteur de profondeur, et qui en amont de l'axe X, est détendue, ce qui permet d'obtenir un rayon maximal, et donc de venir pincer les végétaux en amont de l'axe X. La bande de mousse est un exemple particulier d'outil 48.

De manière générale, le limiteur de profondeur présente de préférence un rayon minimal déterminant la profondeur d'enfoncement maximale et défini par la butée, et un rayon maximal, supérieur au rayon minimal, déterminant le point de pincement Pv' et défini par l'outil 48.

Le pincement des végétaux en amont de l'axe X peut être également réalisé par la butée elle-même, et en particulier par la ceinture, dans la mesure où elle est enfoncée dans le sol dans la position de service. La profondeur P₄₄ de cet enfoncement (figure 4) est de préférence de plus de 1 cm, de plus de 3 cm, de plus de 5 cm, et/ou de moins de 10 cm, de préférence de moins de 8 cm. La surface de contact de la butée avec le sol, notamment la largeur de la ceinture, peut être adaptée à cet effet. Plus la profondeur P₄₄ est grande, plus les végétaux sur le sol seront pincés en un point Pᵥ en amont du plan axial vertical P_{X}, et moins ils s'enfonceront dans la fente.

Bien entendu, les modes de réalisation décrits ci-dessus (figures 3 et 4) peuvent être combinés.

Dans un mode de réalisation, la butée est soudée sur le disque ouvreur.

La butée peut prendre différentes formes. Elle peut, par exemple, prendre la forme d'une pluralité de tiges ou plaques s'étendant le long d'un cylindre virtuel d'axe X.

La largeur d'une butée, et en particulier de la ceinture 44, mesurée selon l'axe X, est de préférence supérieure à 1 cm, de préférence supérieure à 2 cm, de préférence supérieure à 3 cm, de préférence supérieure à 4 cm et/ou de préférence inférieure à 50 cm, de préférence inférieure à 30 cm, de préférence inférieure à 20 cm, de préférence inférieure à 10 cm, de préférence inférieure à 8 cm.

Une ceinture et/ou les outils permettent avantageusement d'immobiliser les végétaux contre la terre lors du passage du disque ouvreur, et évitent ainsi qu'ils soient poussés par le disque ouvreur jusqu'au fond de la fente.

La forme de la ceinture peut être quelconque. De préférence, elle s'étend sur un cylindre ou sur un cône virtuels d'axe X.

La ceinture peut être pleine ou creuse, de largeur constante ou variable, voire être localement interrompue. De préférence, elle est continue, c'est-à-dire en un seul morceau, et fermée sur elle-même.

Dans un mode de réalisation, le limiteur de profondeur est constitué de plusieurs, par exemple quatre morceaux de ceinture coaxiaux s'étendant chacun sur un secteur angulaire inférieur à 85°, ou inférieur à 70°.

Dans un mode de réalisation préféré, la butée est une ceinture 44 qui est fixée sur un plateau 47, lui-même fixé sur le disque ouvreur.

Dans un mode de réalisation préféré, des nervures de renfort 49 sont prévues afin de rigidifier la butée. En particulier, les deux bords d'une équerre définissant un angle droit peuvent être respectivement soudés sur la face radialement intérieure de la ceinture 44 et sur la face du disque ouvreur 14 ou du plateau 47 sur lequel la ceinture 44 est elle-même fixée.

De préférence, le plateau 47 est discoïdal et fixé à sa périphérie, de préférence soudé, à la ceinture. Avantageusement, la durée de vie du plateau en est augmentée.

Dans un mode de réalisation préféré, comme représenté sur les figures 9a-9d, le limiteur de profondeur comporte des première et deuxième ceintures, référencées 44₁ et 44₂, respectivement, de même diamètre extérieur, qui s'étendent sur les première et deuxième faces latérales 43₁ et 43₂ du disque ouvreur 14, respectivement.

De préférence, les ceintures sont conformées pour prendre appui à plat sur le sol S. Dans un mode de réalisation dans lequel l'axe X n'est pas horizontal (figures 8a-8e, 9a-9d), elles s'étendent selon un même cône virtuel d'axe X. L'angle au sommet du cône virtuel est de préférence supérieur à 10° et/ou inférieur à 20°.

La largeur de chaque ceinture est de préférence supérieure à 60 mm, de préférence supérieure à 70 mm et/ou inférieure à 100 mm, de préférence inférieure à 90 mm.

Les ceintures peuvent être lisses. En particulier, la surface radialement extérieure de chaque ceinture peut être lisse, notamment lorsque l'axe X du disque ouvreur est incliné par rapport à l'horizontal (figures 9a-9d).

De préférence encore, les projections de l'axe X du disque ouvreur et de la direction d'avancement F dans un plan horizontal forment un angle λ supérieur à 79°, 80°, 81°, 82°, et/ou inférieur à 89°, de préférence inférieur à 88°, ou 87°, 86°, 85° ou 84°, un angle de 83° étant particulièrement bien adapté. Autrement dit, en roulant, le disque ouvreur a tendance à s'écarter latéralement. Des essais ont montré que ce défaut de parallélisme, qui génère une usure accélérée du disque ouvreur, conduit avantageusement à déchirer très efficacement les végétaux sur le sol.

Dans un mode de réalisation préféré, au moins une, de préférence chaque ceinture porte des crampons, de préférence des bourrelets de matière sous la forme de bandes 80. Chaque bande a une extrémité intérieure 81ᵢ, de préférence en contact avec le disque ouvreur 14, et une extrémité extérieure 81ₑ.

De préférence, chaque extrémité intérieure 81ᵢ est à moins de 3 cm, de préférence moins de 2 cm, de préférence moins de 1 cm du disque ouvreur 14.

De préférence, chaque extrémité extérieure 81ₑ est à moins de 3 cm, de préférence moins de 2 cm, de préférence moins de 1 cm du bord circulaire de la ceinture opposé au disque ouvreur 14.

Chaque bande est de préférence orientée de manière que le pincement par cette bande débute à partir de l'extrémité extérieure 81ₑ de la bande. Le point de pincement par la bande se rapproche ensuite du plan du disque ouvreur à mesure de sa rotation.

La figure 8d représente le sens de rotation R du disque ouvreur à cet effet, ainsi que le sens d'avancement F correspondant.

Chaque bande 80, de préférence sensiblement rectiligne, forme de préférence un angle β supérieur à 10°, de préférence supérieur à 30°, et/ou inférieur à 90°, de préférence inférieur à 70°, de préférence inférieur à 60° avec le plan du disque ouvreur (figure 8e).

On appelle « premières bandes » 80₁ et « deuxièmes bandes » 80₂ les bandes portées par les première et deuxième ceintures, respectivement.

De préférence, toutes les premières bandes 80₁ forment le même angle β avec le plan du disque ouvreur et sont de préférence écartées les unes des autres d'une distance δ constante, de préférence comprise entre 20 mm et 50 mm.

De préférence, toutes les deuxièmes bandes 80₂ forment le même angle β avec le plan du disque ouvreur et sont de préférence écartées les unes des autres d'une distance δ constante, de préférence comprise entre 20 mm et 50 mm.

Comme sur la figure 8e, chaque couple de première et deuxième bandes adjacentes forme de préférence un chevron 84 qui, de préférence, pointe, lorsque le chevron est en contact avec le sol S, dans le sens de l'avancement F du dispositif d'ouverture. Lors de l'avancement, le contact des bandes avec le sol commence donc par leurs extrémités extérieures. Des essais ont montré que cette configuration, en particulier lorsque plusieurs bandes forment des chevrons, est particulièrement avantageuse.

De préférence encore, les première et deuxième bandes qui forment un chevron, de préférence un chevron quelconque, ne se rejoignent pas à la pointe du chevron. De préférence, les extrémités intérieures des bandes qui se succèdent sont alternativement celles de premières bandes et de deuxièmes bandes, la distance *d* entre une extrémité intérieure d'une première bande et une extrémité intérieure d'une deuxième bande étant de préférence constante, de préférence comprise entre 5 et 100 mm, de préférence comprise entre 5 et 70 mm, de préférence comprise entre 5 et 50 mm, de préférence comprise entre 5 et 30 mm.

Lorsque le disque ouvreur 14 est en service, les végétaux, et en particulier la paille, sont ainsi pincés entre la terre et les deux ceintures 44₁ et 44₂. Ce pincement les immobilise et permet ainsi au disque ouvreur de les mettre en tension, puis de les découper.

Non seulement les végétaux ne sont donc pas poussés jusqu'au fond de la fente ménagée par le disque ouvreur, mais aussi ils sont découpés. L'introduction des végétaux au fond de la fente en est donc encore réduite. Ce mode de réalisation est particulièrement avantageux lorsque des composés doivent être introduits dans la fente à différentes hauteurs.

De préférence, les première et deuxième ceintures sont fixées, de préférence soudées ou vissées à la périphérie des premier et deuxième plateaux 47₁ et 47₂ respectifs.

De préférence encore, le disque ouvreur est serré entre les premier et deuxième plateaux au moyen de boulons dont les vis traversent successivement le premier plateau, le disque ouvreur et le deuxième plateau. De préférence encore, ces boulons sont disposés à proximité des première et deuxième ceintures, de préférence à moins de 10 cm, de préférence à moins de 5 cm des première et deuxième ceintures. La fixation des ceintures sur le disque ouvreur est avantageusement simple et rapide. En outre, le disque ouvreur 14, qui constitue une pièce d'usure, peut être facilement remplacé.

Dans le mode de réalisation préféré, le semoir comporte des moyens de réglage de la position du disque ouvreur par rapport au support 12, de préférence au moins suivant la direction verticale.

### Coutre

L'objectif du coutre 16 étant d'élargir la fente créée par le disque ouvreur 14, le coutre 16 présente une épaisseur maximale supérieure à celle de la partie du disque ouvreur 14 pénétrant dans le sol, c'est-à-dire s'étendant radialement au-delà du limiteur de profondeur.

Le coutre comporte de préférence un mât 17 pourvu de moyens de fixation au bras de support 312.

L'épaisseur maximale du coutre 16, mesurée parallèlement à l'axe X, est de préférence supérieure à 10 mm, de préférence supérieure à 15 mm, ou encore supérieure à 20 mm et/ou inférieure à 40 mm, de préférence inférieure à 30 mm. Une telle épaisseur maximale favorise le dépôt des graines et protège la descente de semoir de l'abrasion.

Dans le mode de réalisation préféré, le semoir comporte des moyens de réglage de la position du coutre 16, par rapport au support 12, suivant la direction verticale, c'est-à-dire des moyens de réglage de l'altitude du coutre, et/ou des moyens de réglage de l'inclinaison du coutre 16 par rapport à un plan vertical. De préférence, l'amplitude entre l'altitude la plus élevée et l'altitude la plus faible du coutre est supérieure à 100 mm, de préférence à 150 mm, de préférence supérieure à 200 mm.

L'altitude du coutre est de préférence déterminée de manière que sa profondeur P₁₆ de pénétration dans le sol dans la position de service soit inférieure à la profondeur Pₘₐₓ de pénétration du disque ouvreur. La différence entre Pₘₐₓ et P₁₆ est de préférence inférieure à 5 cm, de préférence inférieure à 3 cm, de préférence inférieure à 1 cm. Avantageusement, le coutre élargit ainsi la fente ménagée par le disque ouvreur sensiblement sur toute sa hauteur.

Dans un mode de réalisation, le semoir comporte encore des moyens de réglage de la position du coutre 16, par rapport à son bras de support 31₂, suivant le sens d'avancement F. L'amplitude entre les positions extrêmes le long de cette direction est de préférence supérieure à 100 mm, de préférence supérieure à 150 mm, de préférence encore supérieure à 200 mm.

Tous les moyens de réglage connus sont envisagés.

Le coutre 16 comporte de préférence des plaquettes frontales de protection 50, en un matériau résistant à l'abrasion, par exemple en carbure de tungstène. Ces plaquettes définissent le bord d'attaque du coutre, par lequel le coutre pénètre dans la fente ménagée par le disque ouvreur 14. Le bord d'attaque est de préférence effilé vers l'avant, afin de favoriser la pénétration du coutre.

Le bord d'attaque du coutre 16 s'étend dans le plan général du disque ouvreur 14, de manière que le coutre pénètre sensiblement dans le plan vertical médian de la fente créée par le disque ouvreur 14.

### Descente de semoir

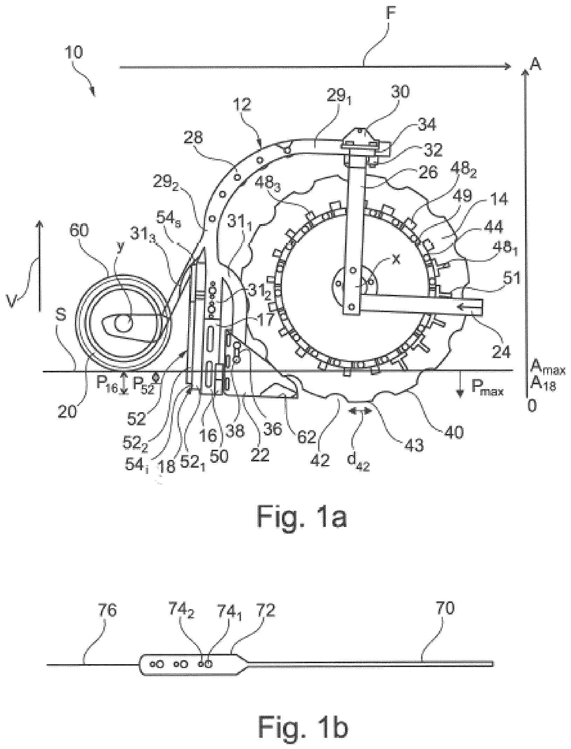

La descente de semoir comporte un ou plusieurs tubes 52, de diamètres intérieurs identiques ou différents. Dans le mode de réalisation de la figure 1, le premier tube 52₁ est par exemple destiné au dépôt d'engrais ou d'un produit anti-limaces. Le deuxième tube 52₂ est destiné au dépôt de graines.

Le nombre de tubes 52 est de préférence inférieur à 15, de préférence inférieur à 10, de préférence inférieur à 6, voire inférieur à 5, et/ou de préférence supérieur à 1, de préférence supérieur à 2, de préférence supérieur à 3.

Le diamètre équivalent intérieur d'un tube 52 est adapté aux composés à déposer. De préférence, il est supérieur à 5 mm, de préférence supérieur à 8 mm, voire supérieur à 10 mm et/ou inférieur à 70 mm, de préférence inférieur à 50 mm, de préférence inférieur à 40 mm, de préférence inférieur à 30 mm, de préférence inférieur à 25 mm.

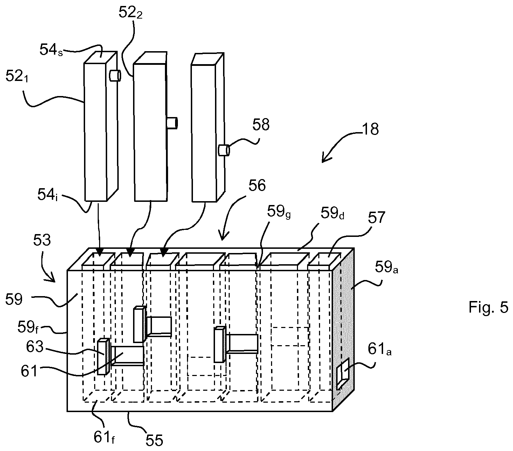

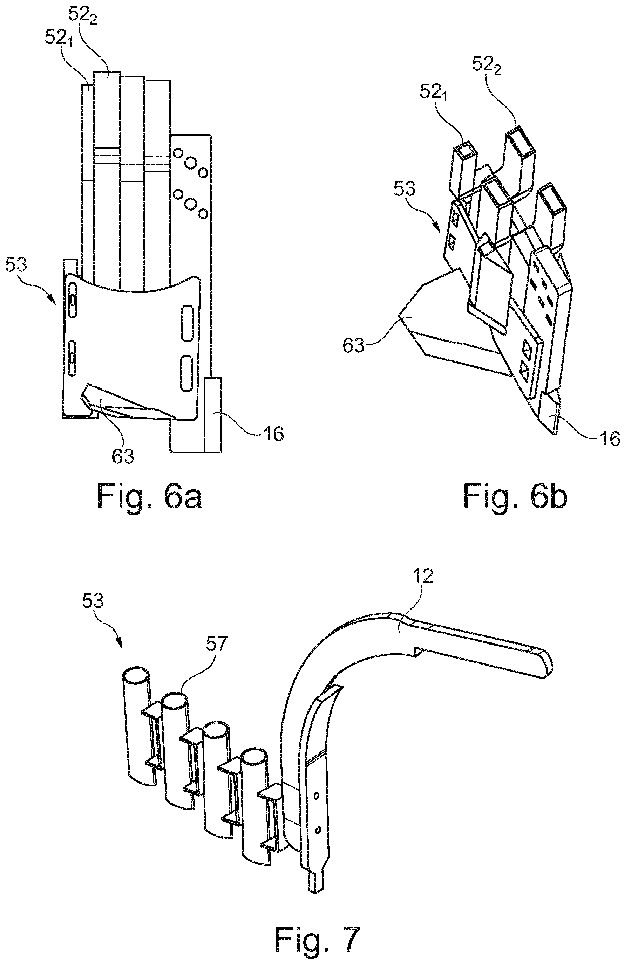

La section d'un tube 52 peut être quelconque, par exemple ronde (figure 7), ovale ou polygonale (figures 5 et 6a/6b). Dans un mode de réalisation, elle est sensiblement rectangulaire, par exemple de 15 mm x 20 mm ou, notamment pour distribuer un produit anti-limace, de préférence de 15 mm x 15 mm.

Dans un mode de réalisation, un tube 52, de préférence chaque tube 52, peut être démonté. Avantageusement, la descente de semoir est ainsi modulable et peut être adaptée à différentes granulométries de composés à distribuer.

De préférence, un tube 52, de préférence chaque tube 52, s'étend dans un plan parallèle au plan du disque ouvreur, de préférence dans le plan du disque ouvreur.

De préférence encore, les tubes 52 s'étendent sensiblement parallèlement les uns aux autres. La compacité du semoir en est améliorée.

De préférence encore, les tubes 52 s'étendent sensiblement parallèlement à la direction générale du coutre, de préférence s'étendent sensiblement verticalement dans la position de service. La compacité du semoir en est améliorée.

Chaque tube, de préférence en inox, débouche par une ouverture supérieure 54ₛ et par une ouverture inférieure 54ᵢ. L'ouverture 54ₛ est destinée à être mise en communication avec une source du composé à déposer, par exemple un réservoir de graines ou de produit phytosanitaire (non représenté), qui peut être notamment solidaire de l'engin de traction ou du support 12.

L'ouverture 54ᵢ est destinée à être disposée dans la fente élargie par le coutre 16. Son altitude *A₁₈* est alors inférieure à l'altitude d'enfoncement maximal *Aₘₐₓ.*

De préférence, le semoir comporte des moyens de réglage de la position de la descente de semoir, par rapport au support 12, suivant la direction verticale, c'est-à-dire des moyens de réglage de l'altitude de la descente de semoir, et/ou dans un plan horizontal. De préférence, ces moyens de réglage autorisent, dans la position de service, une pénétration partielle de la descente de semoir dans la fente élargie. Dans un mode de réalisation préféré, la descente de semoir comporte plusieurs tubes 52 dont les profondeurs P₅₂ peuvent être modifiées indépendamment les unes des autres.

De préférence encore, la profondeur de pénétration dans le sol, P₅₂, d'un tube 52, de préférence d'un tube 52 quelconque, est toujours inférieure à la profondeur de la fente (Pₘₐₓ). De préférence, la profondeur de pénétration P₅₂ d'un tube 52, de préférence d'un tube 52 quelconque, est inférieure à la profondeur P₁₆ du coutre. De préférence encore, la différence entre P₁₆ et P₅₂ est supérieure à 5 mm, de préférence supérieure à 1 cm, voire supérieure à 2 cm. Avantageusement, le fond de la fente élargie par le coutre demeure à distance de l'ouverture inférieure 54ᵢ du tube, et n'interagit pas sensiblement avec le composé à distribuer et encore présent dans le tube 52. La distribution de ce composé en est facilitée.

De préférence, dans une position de service dans laquelle le disque ouvreur est enfoncé à la profondeur d'enfoncement maximale dans un sol horizontal, un tube, de préférence chaque tube débouche par au moins une ouverture inférieure à une profondeur supérieure à 5 cm.

Tous les moyens de réglages connus peuvent être utilisés pour modifier l'altitude de la descente de semoir 18 et/ou, de préférence, d'un ou plusieurs tubes 52.

Dans un mode de réalisation préféré (figure 5), la descente de semoir 18 comporte un boîtier 53.

La forme du boîtier n'est pas limitative (figures 5, 6 ou 7).

De préférence, le boîtier est délimité par une paroi latérale 59, de préférence verticale, et un fond 55, de préférence horizontal, et définissant, du côté opposé au fond 55, une ouverture de boîtier 56 destinée à recevoir plusieurs tubes 52, de préférence plus de 2, plus de 3, plus de 4, plus de 6, plus de 8, plus de 10, voire plus de 12 tubes 52.

La paroi latérale 59 définit, extérieurement, une face latérale droite 59_{d}, une face latérale gauche 59_{g}, une face avant, ou « frontale » 59_{f} et une face arrière 59ₐ. Le fond 55 définit extérieurement une face de fond.

On appelle « faces extérieures » les faces latérale droite 59_{d}, latérale gauche 59_{g}, frontale 59_{f}, arrière 59ₐ et de fond.

Le boîtier 53 peut être fixé sur le support, de préférence de manière réversible. De préférence encore, la fixation du boîtier 53 sur le support 12 autorise une modification de l'altitude du boîtier 53. Par exemple, le support peut comporter plusieurs orifices, à des altitudes différentes, autorisant la fixation du boîtier, par exemple au moyen de boulons (figures 6 et 8). Avantageusement, l'altitude de tous les tubes disposés dans le boîtier peut être ainsi modifiée simultanément.

De préférence, le boîtier 53 définit plusieurs, de préférence plus de 2, plus de 3, plus de 4, voire plus de 5 logements, ou « fourreaux » 57. Chaque fourreau 57 est conformé pour recevoir un tube respectif.

La forme d'un fourreau n'est pas limitative. On considère que toute configuration du boîtier permettant de fixer un tube dans une position prédéterminée est un « fourreau ».

De préférence, la section transversale d'un fourreau est sensiblement complémentaire à celle du tube qu'il reçoit, de sorte qu'après que le tube a été inséré dans le fourreau, il soit sensiblement immobilisé latéralement.

La complémentarité des sections transversales du fourreau et du tube peut servir de moyen détrompeur. Lorsque les tubes présentent des sections transversales différentes, cette complémentarité de forme évite en effet qu'un tube 52 ne soit inséré par erreur dans un fourreau qui ne lui est pas destiné.

De préférence, la descente de semoir comporte encore des moyens d'immobilisation, de préférence réversibles, du tube inséré, par exemple un ou plusieurs pointeaux vissés à travers la paroi latérale du boîtier 53 et venant prendre appui sur le tube inséré. Les pointeaux peuvent avantageusement remplacer les butées de tube 58 décrites ci-après.

Les fourreaux permettent avantageusement d'utiliser la descente de semoir, même lorsque le nombre de tubes 52 est inférieur à la capacité du boîtier 53.

Cependant, la présence de fourreaux n'est pas obligatoire. En particulier, les tubes peuvent être suffisamment nombreux pour obturer l'ouverture de boîtier 56. Chaque tube est ainsi maintenu latéralement par les tubes adjacents et/ou par la paroi latérale 59 du boîtier 53. Les fourreaux sont alors optionnels.

La paroi extérieure du boîtier 53, constituée de la paroi latérale 59 et du fond 55, est percée d'une pluralité d'ouvertures de distribution 61. Chaque ouverture de distribution 61 est associée à un fourreau et à un tube 52 de manière que, lorsque le tube 52 est inséré dans le fourreau, son ouverture inférieure 54ᵢ communique avec l'ouverture de distribution 61. Autrement dit, un composé, comme une semence, un engrais ou un produit anti-limaces, sortant du tube 52 par son ouverture inférieure 54ᵢ, peut sortir du boîtier 53 par l'ouverture de distribution 61.

Dans un mode de réalisation, une unique ouverture de distribution 61 est associée à un fourreau.

Dans un mode de réalisation préféré, au moins deux ouvertures de distribution 61 sont ménagées, à travers la paroi extérieure du boîtier, à des hauteurs différentes.

Dans un mode de réalisation préféré, le boîtier comporte au moins des première et deuxième ouvertures de distribution, la première ouverture de distribution débouchant sur une première face extérieure et la deuxième ouverture de distribution débouchant sur une deuxième face extérieure, différente de la première face extérieure.

Les composés distribués par les différents tubes 52 peuvent ainsi avantageusement sortir de la descente de semoir à des hauteurs et/ou dans des plans longitudinaux verticaux différents.

Dans un mode de réalisation préféré, aucune ouverture de distribution n'est ménagée sur la face frontale 59f, mal protégée contre les entrées de terre lorsque le semoir est tracté.

De préférence encore, l'ouverture de distribution la plus en avant 61f débouche sur la face de fond du boitier 53. Cette configuration est particulièrement avantageuse pour distribuer un engrais.

Dans un mode de réalisation préféré, l'ouverture de distribution la plus en arrière 61ₐ débouche sur la face arrière 59. Cette configuration est particulièrement avantageuse pour distribuer des granulés anti-limaces.

Enfin, de préférence, les autres ouvertures de distribution débouchent sur les faces latérales droite et gauche. Cette configuration est particulièrement bien adaptée pour distribuer des semences.

De préférence, la position verticale d'un tube 52 inséré dans le boîtier 53 est limitée au moyen d'une butée de tube 58 fixée, par exemple soudée, sur le tube et prenant appui sur le boîtier 53, par exemple sur le bord du boîtier 53 qui délimite l'ouverture de boitier 56. De manière équivalente, une butée de tube peut être fixée, par exemple soudée, à l'intérieur du boîtier de manière que, dans la position insérée du tube 52, l'extrémité inférieure du tube repose sur la butée de tube.

Dans un mode de réalisation équivalent, le tube vient prendre appui sur le fond 55 et comporte une ouverture inférieure 54ᵢ disposée de manière à faire face à l'ouverture de distribution associée lorsque le tube est inséré dans le boîtier. De préférence, le tube est alors bouché sous l'ouverture inférieure 54ᵢ pour que le composé à distribuer ne puisse pas descendre, dans le tube, sous l'ouverture inférieure 54ᵢ.

Dans un mode de réalisation, le boitier 53 est constitué par l'assemblage d'une partie droite de boîtier, définissant la face latérale droite 59_{d}, et d'une partie gauche définissant la face latérale gauche 59_{g} du boîtier 53. Avantageusement, la partie droite ou la partie gauche peuvent être changées indépendamment de l'autre partie, ce qui permet de modifier très facilement la position des ouvertures de distribution.

Dans un mode de réalisation, au moins une partie du boîtier, et de préférence au moins la partie droite ou la partie gauche, peut être démontée du reste du boîtier alors que le boîtier est maintenu fixé sur le support 12.

Le boîtier présente ainsi une très grande modularité. Il peut être facilement adapté en fonction des différents composés à distribuer, de manière à distribuer chaque composé à une altitude optimale et dans un plan longitudinal vertical optimal, notamment au regard des autres composés distribués.

Dans un mode de réalisation préféré, la paroi extérieure du boîtier porte un ou plusieurs boucliers 63 de protection des ouvertures de distribution 61. Un bouclier 63 s'étend, au moins en partie, en amont d'une ouverture de distribution 61, de manière à détourner de l'orifice de distribution la terre qui, lorsque le semoir est tracté, pourrait y pénétrer. La forme des boucliers 63 n'est pas limitative. En particulier, un bouclier 63 peut prendre la forme d'une ailette de déflection 62, décrite ci-après (figures 6a et 6b).

De préférence, un bouclier 63 est prévu pour protéger chaque ouverture de distribution débouchant sur la face latérale droite ou la face latérale gauche, voire pour chaque ouverture de distribution 61.

De préférence, un bouclier 63 fait saillie de la paroi extérieure du boîtier de plus de 0,5 cm, de préférence de plus de 1 cm et/ou de préférence de moins de 5 cm, de préférence de moins de 4 cm, de préférence de moins de 3 cm.

De préférence encore, un bouclier 63 est disposé à moins de 3 cm, de préférence à moins de 2 cm, de préférence à moins de 1 cm de l'ouverture de distribution qu'il protège.

La distance entre la descente de semoir 18 et le bord arrière du coutre, ou «bord de fuite », est de préférence inférieure à 50 cm, de préférence inférieure à 25 cm, de préférence inférieure à 10 cm, de préférence inférieure à 5 cm. Dans un mode de réalisation préféré, comme représenté, la descente de semoir 18 est en contact avec le bord de fuite du coutre. La descente de semoir peut même être montée sur le coutre. La compacité du semoir en est améliorée.

Dans un mode de réalisation, « l'épaisseur » maximale de la descente de semoir 18, c'est-à-dire sa dimension mesurée parallèlement à l'axe X, est inférieure à l'épaisseur maximale du coutre 16. Autrement dit, lorsque le semoir est tracté dans sa position de service, la descente de semoir 18 ne bute pas frontalement sur la terre, celle-ci ayant été dégagée par le coutre 16.

La forme de la descente de semoir 18 n'est pas limitative.

En particulier, en l'absence du boîtier, l'ouverture inférieure 54ᵢ peut déboucher sensiblement verticalement, comme dans le mode de réalisation représenté sur la figure 1, mais également dans d'autres directions. En particulier, elle peut déboucher selon une direction orientée vers l'arrière du semoir, ce qui limite les risques d'obturation.

Dans un mode de réalisation, elle peut également déboucher latéralement, par exemple selon une direction parallèle à l'axe X. Bien entendu, les ouvertures 54ᵢ peuvent être orientées différemment selon le tube 52 considéré.

Dans un mode de réalisation, un tube 52 change d'orientation dans sa partie inférieure, de manière à ne pas déposer dans le plan du disque le composé qu'il contient. Le tube peut en particulier présenter la forme d'un « L ». Avantageusement, ce mode de réalisation permet de ne pas déposer à proximité les uns des autres les composés distribués par les différents tubes 52.

Dans un mode de réalisation, le tube se ramifie en partie inférieure, par exemple sous la forme d'un « T » inversé. Avantageusement, ce mode de réalisation permet de distribuer un composé suivant deux lignes parallèles.

### Roue de fermeture

La roue de fermeture 20 est destinée à fermer la fente élargie dans laquelle un ou plusieurs composés ont été déposés.

La roue de fermeture 20 est montée à rotation, de préférence libre, sur l'étançon 28, autour d'un axe Y parallèle à l'axe X. Dans un mode de réalisation préféré, la roue de fermeture 20 est montée sur une suspension, non représentée, par exemple comportant un vérin, notamment hydraulique ou pneumatique, par vis ou ressort. La suspension est de préférence conformée pour autoriser un déplacement vertical de la roue de fermeture 20 par rapport à l'étançon 28 et pour, dans la position de service, presser élastiquement la roue de fermeture 20 sur le sol S. Avantageusement, l'appui de la roue de fermeture 20 sur le sol S est maintenue même lorsque l'étançon 28 subit des secousses. De préférence encore, la raideur de la suspension est réglable.

La roue de fermeture 20 présente de préférence un diamètre supérieur à 10 cm, de préférence supérieur à 20 cm, de préférence supérieur à 25 cm, voire supérieur à 25 cm, supérieur à 50 cm, supérieur à 75 cm, supérieur à 90 cm, et/ou inférieur à 100 cm.

La largeur de la roue de fermeture 20, mesurée parallèlement à l'axe X, est de préférence supérieure à 1 cm, de préférence supérieure à 2 cm, de préférence supérieure à 3 cm, de préférence encore supérieure à 4 cm, de préférence supérieure à 5 cm et /ou inférieure à 10 cm, de préférence inférieure à 8 cm.

La surface de roulement 60 de la roue de fermeture 20 peut être lisse ou, de préférence structurée (crénelée en particulier). Une structuration de la surface de roulement 60 limite les risques de glissement et peut favoriser la fermeture de la fente.

Dans un mode de réalisation, le semoir comporte plusieurs roues de fermeture qui se succèdent le long de la direction de l'avancement, ce qui avantageusement assure une bonne fermeture de la fente.

Dans un mode de réalisation, le semoir comporte deux roues de fermeture 20, de préférence montées à rotation autour d'un axe Y commun, s'étendant de part et d'autre du plan du disque ouvreur. De préférence, chaque roue de fermeture forme, avec le plan du disque ouvreur, un angle supérieur à 5°, de préférence supérieur à 10°, de préférence supérieur à 20° et/ou de préférence inférieur à 40°. Vues de face, les deux roues de fermeture définissent ainsi un V, dont la pointe, coupée, est en appui sur le sol. De préférence, les deux roues de fermeture sont conformées de manière que leurs zones d'appui sur le sol soient écartées l'une de l'autre de moins de 5 cm, de préférence de moins de 3 cm, de préférence de moins de 2 cm. Avantageusement, les roues de fermeture exercent ainsi une action efficace pour refermer la fente.

### Déflecteur

Le déflecteur 22 est destiné à maintenir le semoir partiellement enfoncé dans la terre dans la position de service.

Le déflecteur 22 peut être fixé rigidement sur le support, par exemple soudé sur le support.

Dans le mode de réalisation préféré, le semoir comporte des moyens de réglage de la position du déflecteur 22 par rapport au support 12, de préférence au moins suivant la direction verticale et/ou suivant la direction horizontale.

En particulier, le déflecteur peut comporter des lumières oblongues, ou « boutonnières », 36 traversées par une ou plusieurs vis 38 vissées dans l'étançon 28 de manière que leurs têtes viennent comprimer, et bloquer en position, le déflecteur.

Le déflecteur comporte une ou, de préférence plusieurs ailettes de déflection 62 s'étendant chacune de préférence dans un plan sensiblement parallèle à l'axe X. De préférence, ce plan forme avec un plan horizontal, dans la position de service, un angle supérieur à 2°, de préférence supérieur à 5°, de préférence supérieur à 10°, de préférence supérieur à 20°, de préférence supérieur à 30°, et/ou inférieur à 60°, de préférence inférieur à 45°. Lors de l'avancement du semoir, la pression de la terre sur les ailettes de déflection 62 a ainsi tendance à enfoncer le semoir dans la terre.

Les ailettes de déflection 62 peuvent être en particulier en acier ou en un autre métal ferreux, et comportent de préférence, au moins dans les régions d'usure, du carbure de tungstène ou de la soudure anti-abrasion.

De préférence encore, au moins une ailette de déflection 62 est fixée à droite du déflecteur 22 et au moins une ailette de déflection 62 est fixée à gauche du déflecteur 22. Les ailettes de déflection droite et gauche sont de préférence symétriques par rapport au plan du disque ouvreur, ce qui stabilise le semoir lorsqu'il est tracté.

De préférence, le semoir comporte des moyens de réglage de la position d'au moins une ailette de déflection 62, et de préférence des moyens de réglage de son orientation par rapport à un plan horizontal, et/ou de son altitude par rapport au support. De préférence, l'amplitude entre la position extrême basse et la position extrême haute est supérieure à 40 mm, de préférence supérieure à 50 mm, de préférence encore supérieure à 60 mm et/ou de préférence inférieure à 100 mm.

De préférence, les ailettes de déflection droite et gauche sont réglables indépendamment l'une de l'autre, au moins selon la direction verticale.

La position du déflecteur le long de la direction de l'avancement n'est pas limitative.

### Grattoir

De préférence encore, le semoir 18 comporte un grattoir 51, fixé sur le support de grattoir 24, de manière à enlever les dépôts de terre qui adhèrent au disque ouvreur.

Dans le mode de réalisation présenté, des grattoirs sont prévus au-dessus et en-dessous du support de grattoir 24, de préférence de chaque côté du disque ouvreur. Dans un mode de réalisation, les grattoirs frottent sur le disque ouvreur ou en sont écartés d'une distance inférieure à 5 mm.

Le grattoir 51 peut être en acier. De préférence, dans les zones d'usure, il comporte du carbure de tungstène et/ou de la soudure anti-abrasion.

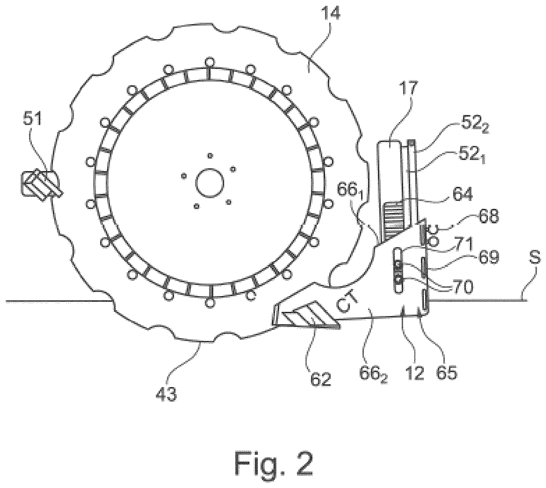

La figure 2 représente une variante de l'invention. Dans cette variante, le déflecteur est intégré dans le coutre. Les ailettes de déflection 62 sont ainsi fixées sur le coutre.

Dans ce mode de réalisation, le déflecteur 22, le coutre 16 et la descente de semoir 18 forment un ensemble compact, fixé sur un même bras de l'étançon.

Le coutre 16 comporte un mât 17, destiné à être fixé sur un bras du support, et une chaussette 65, enfilée sur le mât. Plus précisément, la chaussette comporte deux joues droites 66₁ et 66₂, reliées par une plaque de liaison 69, sensiblement verticale. Les deux joues prennent en sandwich le mât 17. Des vis 70, vissées sur le mât et traversant une boutonnière verticale 71 ménagée dans une des joues, bloquent en position la chaussette par rapport au mât 17.

La position de la chaussette est réglable selon la direction verticale et/ou, dans un mode de réalisation, selon la direction horizontale. La boutonnière verticale 71 guide le réglage vertical. Des rainures 64 sensiblement horizontales permettent d'améliorer le maintien en position de la chaussette après serrage des vis 70.

Des vis 68, vissées dans des filets ménagés dans la plaque de liaison permettent enfin, avantageusement, de bloquer en position les tubes 52 en les serrant contre le mât 17.

### Fonctionnement

Le fonctionnement d'un semoir selon l'invention résulte directement de la description qui précède.

Initialement, les pièces sont assemblées les unes aux autres, le boîtier de semoir et les tubes qui y sont insérés étant adaptés aux composés à distribuer, notamment pour déterminer, en fonction de chaque composé, l'altitude et le plan longitudinal vertical de l'ouverture de distribution correspondante.

L'étançon 18 est attaché à un tracteur puis tiré sur le terrain à semer.

Le disque ouvreur 14 s'enfonce progressivement dans le sol S, jusqu'à ce que le limiteur de profondeur, en l'occurrence la ceinture 44, limite cet enfoncement. La position de service est atteinte et les ailettes de déflection 62 exercent une force tendant à maintenir cette position.

Lors de son avancement, le disque ouvreur 14 crée une fente étroite 70 (figure 1b). Le disque ouvreur 14 agit à la manière d'une roulette à pizzas et vient notamment découper les racines sur son passage. Avantageusement, la terre n'a pas besoin d'être préparée.

Les grattoirs 51 détachent la terre qui se serait collée sur le disque ouvreur.

Lors de l'avancement du disque ouvreur 14 (flèche F), les outils 48 viennent avantageusement travailler légèrement le sol à proximité de la fente, ce qui favorise sa fermeture ultérieure.

Notamment dans le mode de réalisation représenté sur la figure 4, la butée, en l'occurrence la ceinture 44, est enfoncée à une profondeur P₄₄ dans le sol S. Elle vient ainsi pincer, en un point Pᵥ en amont de l'axe X (l'amont et l'aval étant déterminés en référence au sens d'avancement F, par rapport à l'axe X), les végétaux qui sont sur le sol. Ce pincement s'oppose à l'enfoncement de ces végétaux jusqu'au fond de la fente, ce qui assure un contact optimal entre les composés déposés dans le fond de la fente et la terre.

De préférence, le disque ouvreur est pourvu de dites première et deuxième ceintures qui viennent bien pincer les végétaux contre le sol, légèrement devant (« en amont ») le plan axial vertical Px, de chaque côté du disque ouvreur. L'enfoncement des végétaux dans la fente en est encore réduit.

Dans le mode de réalisation de la figure 3, l'outil 48 s'étend radialement vers l'extérieur, au-delà de la butée que constitue la ceinture. Lors de la rotation du disque ouvreur, l'outil 48 s'enfonce à une profondeur P₄₈ dans le sol S. Il vient ainsi pincer, en un point Pᵥ' en amont du plan axial vertical P_{X}, les végétaux qui sont sur le sol.

La distance Δ entre le point de pincement et le plan axial vertical est de préférence supérieure à 5 cm, de préférence supérieure à 10 cm, voire supérieure à 15 cm, à 20 cm, à 25 cm ou à 30 cm.

Le coutre 16 vient élargir la fente étroite 70. La fente élargie 72 reçoit alors les composés 74ᵢ injectés à travers les tubes 52ᵢ puis les ouvertures de distribution 61ᵢ, respectivement.

La roue de fermeture 20 vient enfin rouler sur la fente élargie 72 pour la refermer.

Des essais ont montré qu'un semoir selon l'invention est particulièrement robuste et fiable. Il n'entraîne pas de bourrages et laisse derrière lui une surface 76 sensiblement plane, dans laquelle la fente est bien refermée.

Par ailleurs, les tubes de la descente du semoir débouchent dans la fente élargie, ce qui permet de déposer avec précision les composés, et en particulier les graines, à la profondeur souhaitée.

Les différents réglages en altitude et/ou selon la direction de l'avancement confèrent enfin un large spectre d'utilisations. Notamment, le semoir peut être utilisé pour amender et/ou semer différentes graines, dans des sols très différents.

Bien entendu, l'invention n'est pas limitée aux modes de réalisation décrits et représentés, fournis à des fins illustratives seulement.

## Revendications

1. Semoir comportant un support (12) destiné à être tracté par un engin agricole et supportant :
- un dispositif d'ouverture, comportant :
- un disque ouvreur (14) d'axe X, monté à rotation sur le support, le disque ouvreur (14) étant de forme générale discoïdale afin d'assurer l'ouverture d'une fente continue ;
- un limiteur de profondeur fixé sur le disque ouvreur et comportant une butée (44) définissant, dans une position de service, une profondeur d'enfoncement maximale du disque ouvreur dans le sol,
- une descente de semoir (18),
- un coutre (16) interposé entre le disque ouvreur et la descente de semoir,
- une roue de fermeture (20), la descente de semoir étant interposée entre le coutre et la roue de fermeture,
le coutre et la descente de semoir s'étendant dans le plan du disque ouvreur, **caractérisé en ce que** le limiteur de profondeur comporte des moyens de pincement (48) configurés pour, dans ladite position de service, pincer des végétaux contre le sol, en un point de pincement (Pᵥ, Pᵥ') localisé, suivant le sens d'avancement, devant l'axe X.

2. Semoir selon la revendication précédente, dans lequel, dans la position de service, l'axe X de rotation du disque ouvreur est incliné, par rapport à un plan horizontal, d'un angle θ supérieur à 3° et inférieur à 10°.

3. Semoir selon l'une quelconque des revendications précédentes, dans lequel, dans la position de service, vu de dessus, l'axe X de rotation du disque ouvreur forme un angle (λ) supérieur à 79° et inférieur à 89° avec le plan de la roue de fermeture.

4. Semoir selon l'une quelconque des revendications précédentes, dans lequel la butée comporte au moins une ceinture (44₁;44₂) coaxiale au disque ouvreur.

5. Semoir selon la revendication immédiatement précédente, comportant des crampons faisant saillie sur la surface radialement extérieure de la ceinture.

6. Semoir selon l'une quelconque des deux revendications immédiatement précédentes, dans lequel la ceinture est tronconique d'axe X.

7. Semoir selon l'une quelconque des revendications 4 à 6, dans lequel des outils de préparation du sol sont fixés sur la ceinture, lesdits outils présentant de préférence la forme de plaques s'étendant sensiblement radialement ou sensiblement perpendiculairement à l'axe X ou comportant deux plaques formant un V fixées, par la pointe du V, sur la face radialement extérieure de ladite ceinture, ou étant des cornières ou des profilés en T ou en T inversé ou en U ou en U inversé ou en rectangle ou en carré.

8. Semoir selon l'une quelconque des quatre revendications immédiatement précédentes, comportant des première (44₁) et deuxième (44₂) dites ceintures, qui s'étendent sur des première (43₁) et deuxième (43₂) faces latérales du disque ouvreur (14), respectivement.

9. Semoir selon la revendication immédiatement précédente, dans lequel les première et deuxième ceintures s'étendent suivant la même surface conique.

10. Semoir selon l'une quelconque des deux revendications immédiatement précédentes, dans lequel les surfaces radialement extérieures des première et deuxième ceintures portent des bourrelets de matière sous la forme de premières bandes (80₁) et de deuxièmes bandes (80₂), respectivement, lesdites premières et deuxièmes bandes étant agencées de manière à définir une pluralité de chevrons, chaque chevron (84) pointant, dans la position de service et lorsqu'il est en contact avec le sol (S), dans le sens de l'avancement (F) du semoir.

11. Semoir selon la revendication immédiatement précédente, dans lequel les première et deuxième bandes qui forment un chevron ne se rejoignent pas à la pointe du chevron.

12. Semoir selon la revendication immédiatement précédente, dans lequel chacune des première et deuxième bandes a une extrémité intérieure (81ᵢ) à moins de 1 cm du disque ouvreur (14), la distance *d* entre les projections axiales, dans le plan du disque ouvreur, de l'extrémité intérieure (80ᵢ) de la première bande et de l'extrémité intérieure de la deuxième bande étant comprise entre 5 et 50 mm.

13. Semoir selon l'une quelconque des cinq revendications immédiatement précédentes, dans lequel les première (44₁) et deuxième (44₂) ceintures sont fixées à la périphérie de premier (47₁) et deuxième (47₂) plateaux respectifs, de même diamètre extérieur, qui s'étendent sur les première (43₁) et deuxième (43₂) faces latérales du disque ouvreur (14), respectivement, le disque ouvreur (14) étant serré entre les premier et deuxième plateaux au moyen de boulons dont les vis traversent successivement le premier plateau, le disque ouvreur et le deuxième plateau.

14. Semoir selon l'une quelconque des revendications précédentes, dans lequel la descente de semoir comporte :
- un boîtier (53) ;
- une pluralité de tubes (52) insérés dans le boîtier et débouchant chacun par une ouverture supérieure (54ₛ) et, à l'intérieur du boîtier, par une ouverture inférieure (54i),
le boîtier étant constitué par assemblage de plusieurs parties démontables et comportant une pluralité d'ouvertures de distribution (61), chaque ouverture de distribution étant en communication avec au moins une ouverture inférieure (61) respective, de manière qu'un composé sortant de l'ouverture inférieure puisse sortir du boîtier à travers l'ouverture de distribution,
le semoir comportant encore une ou plusieurs parties de substitution substituables à au moins une desdites parties démontables et présentant un agencement d'ouvertures de distribution différent d'au moins une desdites parties démontables.

15. Procédé d'ouverture d'un sol (S) au moyen d'un semoir selon l'une quelconque des revendications précédentes, procédé suivant lequel on tracte ledit semoir dans une position de service dans laquelle la butée (44) est en butée sur le sol de manière à définir la profondeur d'enfoncement maximale du disque ouvreur dans le sol, les moyens de pincement venant pincer des végétaux contre le sol, en un point de pincement localisé, suivant le sens d'avancement, devant l'axe X.

## Patentansprüche

1. Sämaschine, umfassend einen Träger (12), der dazu bestimmt ist, von einer landwirtschaftlichen Maschine gezogen zu werden, und folgendes trägt:
- eine Öffnungsvorrichtung, umfassend:
- eine Öffnerscheibe (14) mit einer Achse X, die drehbar am Träger montiert ist, wobei die Öffnerscheibe (14) im Allgemeinen scheibenförmig ist, um die Öffnung einer durchgehenden Spalte zu ermöglichen;
- einen Tiefenbegrenzer, der an der Öffnerscheibe befestigt ist und einen Anschlag (44) umfasst, der in einer Betriebsposition eine maximale Eindringtiefe der Öffnerscheibe in den Boden definiert,
- eine Säschar (18),
- ein Sech (16), das zwischen der Öffnerscheibe und der Säschar angeordnet ist,
- ein Schließrad (20), wobei die Säschar zwischen dem Sech und dem Schließrad angeordnet ist,
wobei sich das Sech und die Säschar in der Ebene der Öffnerscheibe erstrecken,
**dadurch gekennzeichnet, dass** der Tiefenbegrenzer Quetschmittel (48) umfasst, die dazu konfiguriert sind, in der Betriebsposition Pflanzen an einem Quetschpunkt (Pv, Pv' ), der sich in der Vorschubrichtung vor der Achse X befindet, gegen den Boden zu quetschen.

2. Sämaschine nach dem vorangehenden Anspruch, wobei in der Betriebsposition die Drehachse X der Öffnerscheibe in Bezug auf eine horizontale Ebene um einen Winkel θ geneigt ist, der größer als 3° und kleiner als 10° ist.

3. Sämaschine nach einem der vorangehenden Ansprüche, wobei in der Betriebsposition von oben gesehen die Drehachse X der Öffnerscheibe mit der Ebene des Schließrads einen Winkel (λ) von mehr als 79° und weniger als 89° ausbildet.

4. Sämaschine nach einem der vorangehenden Ansprüche, wobei der Anschlag zumindest einen zur Öffnerscheibe koaxialen Riemen (44₁; 44₂) umfasst.

5. Sämaschine nach dem unmittelbar vorangehenden Anspruch, umfassend Krampen, die von der radial äußeren Fläche des Riemens vorstehen.

6. Sämaschine nach einem der beiden unmittelbar vorangehenden Ansprüche, wobei der Riemen in der X-Achse kegelstumpfförmig ist.

7. Sämaschine nach einem der Ansprüche 4 bis 6, wobei am Riemen Bodenvorbereitungswerkzeuge befestigt sind, wobei die Werkzeuge vorzugsweise die Form von Platten aufweisen, die sich im Wesentlichen radial oder im Wesentlichen senkrecht zur X-Achse erstrecken oder zwei V-förmige Platten umfassen, die mit der Spitze des V an der radial äußeren Seite des Riemens befestigt sind, oder Winkeleisen oder Profile von T- oder umgekehrter T- oder von U- oder umgekehrter U- oder rechteckiger oder quadratischer Form sind.

8. Sämaschine nach einem der vier unmittelbar vorangehenden Ansprüche, umfassend einen ersten (44₁) und einen zweiten (44₂) Riemen, die sich über eine erste (43₁) bzw. eine zweite (43₂) Seitenfläche der Öffnerscheibe (14) erstrecken.

9. Sämaschine nach dem unmittelbar vorangehenden Anspruch, wobei sich der erste und der zweite Riemen entlang derselben konischen Fläche erstrecken.

10. Sämaschine nach einem der beiden unmittelbar vorangehenden Ansprüche, wobei die radial äußeren Flächen des ersten und des zweiten Riemens Materialwülste in Form von ersten Streifen (80₁) bzw. zweiten Streifen (80₂) tragen, wobei die ersten und die zweiten Streifen so angeordnet sind, dass sie mehrere Zickzacklinien definieren, wobei jede Zickzacklinie (84) in der Betriebsposition und wenn sie mit dem Boden (S) in Kontakt ist in die Vorschubrichtung (F) der Sämaschine weist.

11. Sämaschine nach dem unmittelbar vorangehenden Anspruch, wobei der erste und der zweite Streifen eine Zickzacklinie bilden und an der Spitze der Zickzacklinie nicht zusammentreffen.

12. Sämaschine nach dem unmittelbar vorangehenden Anspruch, wobei sowohl der erste als auch der zweite Streifen ein inneres Ende (81ᵢ) aufweisen, das weniger als 1 cm von der Öffnerscheibe (14) entfernt ist, wobei der Abstand d zwischen den axialen Projektionen des inneren Endes (80ᵢ) des ersten Streifens und des inneren Endes des zweiten Streifens in der Ebene der Öffnerscheibe zwischen 5 und 50 mm liegt.

13. Sämaschine nach einem der fünf unmittelbar vorangehenden Ansprüche, wobei der erste (44₁) und der zweite (44₂) Riemen am Umfang einer ersten (47₁) bzw. zweiten (47₂) Platte mit gleichem Außendurchmesser befestigt sind, die sich über die erste (43₁) bzw. zweite (43₂) Seitenfläche der Öffnerscheibe (14) erstrecken, wobei die Öffnerscheibe (14) zwischen der ersten und der zweiten Platte mit Hilfe von Bolzen eingeklemmt ist, deren Schrauben nacheinander durch die erste Platte, die Öffnerscheibe und die zweite Platte verlaufen.

14. Sämaschine nach einem der vorangehenden Ansprüche, wobei die Säschar Folgendes umfasst:
- ein Gehäuse (53);
- mehrere Rohre (52), die in das Gehäuse eingesetzt sind und jeweils über eine obere Öffnung (54ₛ) und, im Inneren des Gehäuses, über eine untere Öffnung (54ᵢ) ausmünden,
wobei das Gehäuse durch die Montage mehrerer demontierbarer Teile gebildet ist und mehrere Abgabeöffnungen (61) umfasst, wobei jede Abgabeöffnung mit zumindest einer jeweiligen unteren Öffnung (61) in Verbindung steht, so dass eine aus der unteren Öffnung austretende Zusammensetzung über die Abgabeöffnung aus dem Gehäuse austreten kann,
wobei die Sämaschine ferner ein oder mehrere Ersatzteile umfasst, die zumindest eines der demontierbaren Teile ersetzen können und eine Anordnung von Abgabeöffnungen aufweisen, die sich von zumindest einem der demontierbaren Teile unterscheidet.

15. Verfahren zum Öffnen eines Bodens (S) mit Hilfe einer Sämaschine nach einem der vorangehenden Ansprüche, wobei nach dem Verfahren die Sämaschine in einer Betriebsposition gezogen wird, in der der Anschlag (44) am Boden anliegt, so dass die maximale Eindringtiefe der Öffnerscheibe in den Boden definiert wird, wobei die Quetschmittel Pflanzen an einem lokalisierten Quetschpunkt in der Vorschubrichtung vor der X-Achse gegen den Boden quetschen.

## Claims

1. Seeder comprising a support (12) intended to be drawn by an agricultural vehicle and supporting:
- an opening device, comprising:
- an opening disk (14), of axis X, mounted to rotate on the support, the opening disk (14) being of discoidal overall shape so as to open a continuous furrow;
- a depth limiter fixed to the opening disk and comprising a limit stop (44) which, in a service position, defines the maximum depth to which the opening disk penetrates the ground,
- a seed dropper (18),
- a coulter (16) interposed between the opening disk and the seed dropper,
- a thorough-closing wheel (20), the seed dropper being interposed between the coulter and the furrow-closing wheel,
the coulter and the seed dropper extending in the plane of the opening disk,
**characterized in that** the depth limit comprises pinching means (48) configured so that, in the said service position, they pinch plants against the ground, at a pinch point (Pᵥ, Pᵥ') located, according to the direction of forward travel, in front of the axis X.

2. Seeder according to the preceding claim, in which, in the service position, the axis X of rotation of the opening disk is inclined, with respect to a horizontal plane, by an angle θ greater than 3° and less than 10°.

3. Seeder according to any one of the preceding claims, in which, in the service position, viewed from above, the axis X of rotation of the opening disk forms an angle (λ) greater than 79° or less than 89° with the plane of the furrow-closing wheel.

4. Seeder according to any one of the preceding claims, in which the limit stop comprises at least one band (44₁; 44₂) coaxial with the opening disk.

5. Seeder according to the immediately preceding claim, comprising cleats projecting from the radially exterior surface of the band.

6. Seeder according to either one of the two immediately preceding claims, in which the band is frustoconical with axis X.

7. Seeder according to any one of Claims 4 to 6, in which soil-preparation tools are fixed to the band, the said tools preferably taking the form of plates extending substantially radially or substantially perpendicularly with respect to the axis X or comprising two plates forming a V which are fixed, by the point of the V, to the radially exterior face of the said band, or being angle sections or T-sections or inverted T sections or U-sections or inverted U-sections or rectangular sections or square sections.

8. Seeder according to any one of the four immediately preceding claims, comprising first (44₁) and second (44₂) said bands, which extend on first (43₁) and second (43₂) lateral faces of the opening disk (14), respectively.

9. Seeder according to the immediately preceding claim, in which the first and second bands extend over the same conical surface.

10. Seeder according to either one of the two immediately preceding claims, in which the radially exterior surfaces of the first and second bands bear beads of material in the form of first strips (80₁) and of second strips (80₂), respectively, said first and second strips being arranged in such a way as to define a plurality of chevrons, each chevron (84) pointing, in the service position and where it is in contact with the ground (S), in the direction of forward travel (F) of the seeder.

11. Seeder according to the immediately preceding claim, in which the first and second strips that form a chevron do not meet at the point of the chevron.

12. Seeder according to the immediately preceding claim, in which each of the first and second strips has an inboard end (81ᵢ) less than 1 cm from the opening disk (14), the distance d between the axial projections, in the plane of the opening disk, of the inboard end (80ᵢ) of the first strip and the inboard end of the second strip being comprised between 5 and 50 mm.

13. Seeder according to any one of the five immediately preceding claims, in which the first (44₁) and second (44₂) bands are fixed at the periphery of first (47₁) and second (47₂) respective plates, having the same outside diameter, which extend on the first (43₁) and second (43₂) lateral faces of the opening disk (14) respectively, the opening disk (14) being clamped between the first and second plates by means of bolts of which the threaded shanks pass in succession through the first plate, the opening disk and the second plate.

14. Seeder according to any one of the preceding claims, in which the seed dropper comprises:
- a box (53);
- a plurality of tubes (52) inserted into the box and each opening via an upper opening (54ₛ) and, inside the box, via a lower opening (54ᵢ),
the box consisting of an assembly of several removable parts and comprising a plurality of distribution openings (61), each distribution opening being in communication with at least one respective lower opening (61) so that a compound leaving the lower opening can exit the box through the distribution opening,
the seeder further comprising one or more substitute parts which can be substituted for at least one of the said removable parts and that have a different arrangement of distribution openings from at least one of the said removable parts.

15. Method for opening the ground (S) by means of a seeder according to any one of the preceding claims, according to which method said seeder is drawn in a service position in which the limit stop (44) is in abutment against the ground so as to define the maximum depth to which the opening disk penetrates the ground, the pinching means pinching plants against the ground, at a pinch point located, according to the direction of travel, in front of the axis X.
